Europäisches Patentamt

European Patent Office

Office européen des brevets

(19)

(11) Veröffentlichungsnummer: **0 002 074**
**B1**

(12) **EUROPÄISCHE PATENTSCHRIFT**

(21) Anmeldenummer: **78200182.0**

(22) Anmeldetag: **11.09.78**

(51) Int. Cl.³: **B 62 D 1/04,** B 29 D 27/04

(54) **Kraftfahrzeuglenkrad mit Deformationskörper.**

(30) Priorität: **10.11.77 DE 2750235**

(43) Veröffentlichungstag der Anmeldung:
**30.05.79 Patentblatt 79/11**

(45) Bekanntmachung des Hinweises auf die Patenterteilung:
**28.01.81 Patentblatt 81/4**

(84) Benannte Vertragsstaaten:
**DE FR GB SE**

(56) Entgegenhaltungen:
DE - A - 2 129 286
DE - B - 1 278 858
DE - U - 1 970 385
DE - U - 7 125 806

(73) Patentinhaber: **KARL-SCHMIDT GMBH**
**Christian-Schmidt-Strasse 8/12**
**D-7107 Neckarsulm (DE)**

(72) Erfinder: **Grothe, Klaus, Ing. grad.**
**Karlstrasse 13**
**D-8750 Aschaffenburg (DE)**

(74) Vertreter: **Fischer, Ernst, Dr.**
**Reuterweg 14**
**D-6000 Frankfurt am Main 1 (DE)**

Kraftfahrzeuglenkrad mit Deformationskörper

Die Erfindung betrifft ein schüsselförmiges Kraftfahrzeuglenkrad mit einem innerhalb des Lenkradkranzes über der versenkt angebrachten, mit dem Lenkradkranz über die Lenkradspiechen verbundenen Lenkradnabe angeordneten, einen Teil der Schüsselform ausfüllenden, auf der Oberseite der Lenkradspiechen und der Stirnseite der Lenkradnabe aufliegenden Deformationskörper.

Solche Deformationskörper haben im Bereich der Maßnahmen zur Erhöhung der passiven Sicherheit in Kraftfahrzeugen den Zweck, zu verhindern, daß der Kraftfahrzeugfahrer mit angelegtem Sicherheitsgurt im Falle unfallbedingter Geschwindigkeitsverzögerungen des Kraftfahrzeuges nach Erreichen der Maximalbelastung des Sicherheitsgurtes mit dem Kopf anschließend auf den oberen Lenkradkranzbogen oder auf Lenkradspiechenabschnitte aufschlägt. Darüber hinaus gewährleisten derartige Deformationskörper auch, daß ein ohne Sicherheitsgurt fahrender Kraftfahrer bei einem Auffahrunfall bei unteren und mittleren Geschwindigkeiten beim Aufschlag des Körpers auf das Lenkrad einer verminderten Verletzungsgefahr unterliegt.

In den Bereich der bekannten Deformationskörper gohören z.B. die zwischen Lenkrad und Lenksäule eingefügten metallischen Deformationstöpfe (DE-C-947 048) oder auch rohrförmige, mit rhombenförmigen Ausschnitten versehene metallische Deformationselemente (DE-A-19 12 528).

Ferner gibt es die Möglichkeit, innerhalb des Lenkradkranzes auf der versenkt angebrachten Lenkradnabe einen völlig aus einem nicht elastischen, homogenen und nur plastisch verformbaren Hartschaum aus Polyurethan oder dergleichen bestehenden Verformungskörper zu befestigen, der eine glatte Oberfläche aufweist und einen wesentlichen Teil des Lenkradquerschnitts ausfüllt (DE-B-23 12 843).

Bekannt ist auch, zur Erhöhung der passiven Sicherheit sowie zur Verbesserung der Griffigkeit und aus ästhetischen Gründen den Lenkradkranz, die Lenkradspeichen und den Umfang der Lenkradnabe mit einem weichen, elastischen Kunststoff, wie z.B. Polyurethan-Integralschaum, zu umschäumen. Zusätzlich kann ein aus dem gleichen Kunststoff bestehender Deformationskörper auf der Lenkradnabe angeordnet sein.

Solche Kunststoffschäume haben jedoch, insbesondere in Zonen mit großer Schaumanhäufung, den Nachteil einer zu geringen Eigenfestigkeit, so daß gemäß DE-U-75 30 843 beispielsweise auf den Lenkradspeichen in den Kunststoffschaum eingebettete Armierungsglieder befestigt sind. Ein weiterer Nachteil ist darin zu sehen, daß diese Kunststoffschäume nur elastisch verformbar sind.

Es ist die Aufgabe der vorliegenden Erfindung, das Kraftfahrzeuglenkrad der eingangs genannten Bauart so zu gestalten, daß die passive Sicherheit erhöht und eine gute Griffigkeit sowie gute ästhetische Wirkung erzielt werden.

Die Lösung dieser Aufgabe besteht darin, daß der Lenkradkranz, der Außenumfang der Lenkradnabe, die Lenkradspeichen, mit Ausnahme der Bereiche, in denen der Deformationskörper aufliegt, und die Oberfläche des Deformationskörpers, mit Ausnahme seiner Auflageflächen auf den Lenkradspeichen und der Stirnseite der Lenkradnabe, mit einer zusammenhängenden Polyurethan-Integralschaumschicht überzogen sind.

Als Werkstoff für den Deformationskörper kommen insbesondere Hartschaum aus Polyurethan, Polystyrolschaum, Phenolharzschaum, Metalldrahtgestricke oder dergleichen in Betracht.

Das Kraftfahrzeuglenkrad läßt sich vergleichsweise einfach herstellen, indem das Skelett des Kraftfahrzeuglenkrades zusammen mit dem Deformationskörper unter Bildung eines der erforderlichen Schichtdicke der Polyurethan-Integralschaumschicht entsprechenden Zwischenraums zur Lenkradnabe in die Gießform eingelegt und dann des Lenkradskelett sowie der Deformationskörper mit Ausnahme der Bereiche der Lenkradspeichen und der Lenkradnabe, auf denen der Deformationskörper aufliegt, mit Polyurethan-Integralschaum umschäumt werden.

Auf diese Weise gelingt es, ein Kraftfahrzeuglenkrad mit guter Griffigkeit, guter ästhetischer Wirkung und hoher plastischer Verformbarkeit seines Deformationskörpers ausgesprochen zeitsparend herzustellen. Darüber hinaus kann auf alle Maßnahmen verzichtet werden, die bisher zur Erzielung der Formstabilität von mit Polyurethan-Intergralschaum umschäumten Kraftfahrzeuglenkrädern notwendig waren. Ferner wird bei der Verwendung von Polystyrolschaum, verglichen mit Polyurethan-Integralschaum, ein um ca. 60% niedrigeres spezifisches Gewicht und damit eine bedeutende Gewichtsersparnis erzielt, was der im Automobilbau vorhandenen Tendenz nach allgemeiner Gewichtsverringerung sehr entgegen kommt. Abgesehen von diesen Vorteilen, ergibt sich zusätzlich eine beachtliche Kostenersparnis, da Schäume der genannten Art kostengünstiger als Polyurethan-Integralschaum angeboten werden.

Ein Ausführungsbeispiel ist in der Zeichnung beispielhaft dargestellt und wird nachstehend näher erläutert.

Es zeigen:

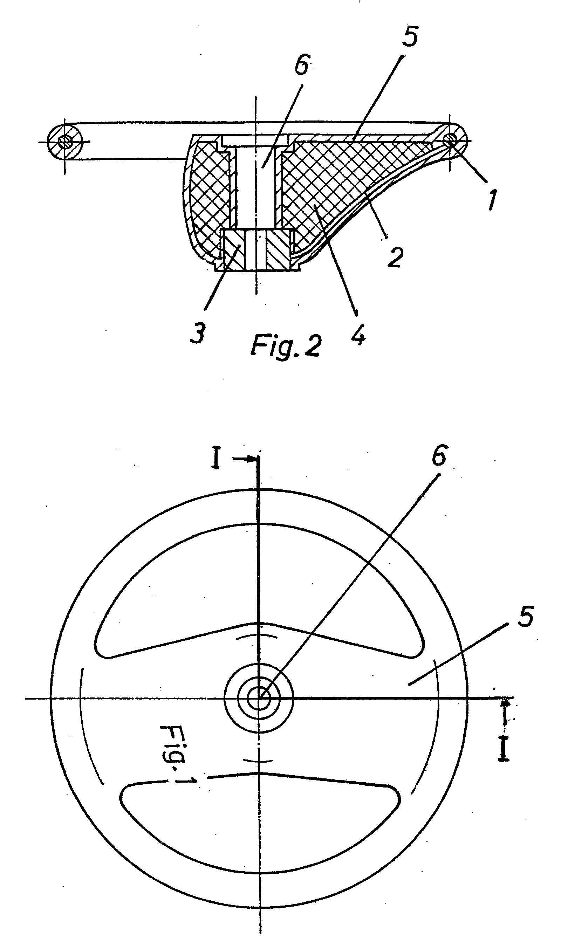

Fig. 1 eine Draufsicht auf das Kraftfahrzeuglenkrad.

Fig. 2 einen Querschnitt entlang der Schnittlinie I—I der Fig. 1 durch das Kraftfahrzeuglenkrad.

Bei dem aus dem Lenkradkranz 1, den Lenkradspeichen 2 und der Lenkradnabe 3 gebildeten Skelett ist ein aus Polystyrolschaum bestehender Deformationskörper 4 auf der Oberseit der Lenkradspeichen 2 aufliegend angeordnet. Der Lenkradkranz 1, die Lenkradnabe 3, die Unterseite der Lenkradspeichen 2 sowie der Deformationskörper 4 sind, mit Ausnahme seiner auf der Oberseite der Lenkradspeichen und der Stirnseite der Lenkradnabe aufliegenden Flächen, mit einer Polyurethan-Integralschaumschicht 5 überzogen. In die Durchbrechung 6, deren Innenwand mit der Polyurethan-Integralschaumschicht überzogen ist, wird bei der Montage des Lenkrades die Betätigungsvorrichtung für die Signaleinrichtung eingesetzt.

**Patentansprüche**

1. Schüsselförmiges, ein Skelett aufweisendes Kraftfahrzeuglenkrad mit einem innerhalb des Lenkradkranzes (1) über der versenkt angebrachten, mit dem Lenkradkranz (1) über die Lenkradspeichen (2) verbundenen Lenkradnabe (3) angeordneten, einen Teil der Lenkradspeichen (2) ausfüllenden, auf der Oberseite der Lenkradspeichen (2) und der Stirnseite der Lenkradnabe (3) aufliegenden, aus einem homogenen, plastisch verformbaren Wirkstoff bestehenden Deformationskörper (4), *dadurch gekennzeichnet, daß* der Lenkradkranz (1), der Außenumfang der Lenkradnabe (3), die Lenkradspeichen (2), mit Ausnahme der Bereiche, in denen der Deformationskörper (4) aufliegt, und die Oberfläche des Deformationskörpers (4), mit Ausnahme seiner Auflageflächen auf den Lenkradspeichen und der Stirnseite der Lenkradnabe, mit einer zusammenhänggenden Polyurethan-Integralschaumschicht (5) überzogen sind.

2. Kraftfahrzeuglenkrad nach Anspruch 1, *dadurch gekennzeichnet,* daß der Werkstoff für den Deformationskörper (4) aus Hartschaum aus Polyurethan, Polystyrolschaum, Phenolharzschaum, Metalldrahtgestricken oder dergleichen besteht.

**Claims**

1. A steering wheel for motor vehicles consisting of a bowl-shaped skeleton comprising a rim (1), a hub (3) and spokes (2) joining the rim (1) and hub (3) and a deformable member (4) of a plastically deformable, homogeneous material said deformable member (4) is desposed within the rim over the recessed hub (3) filling out part of the bowl and lying on the upper surface of the spokes (2) and on the end face of the hub (3), characterized in that the rim (1) and the outside periphery of the hub (3) and the spokes (2) except for the surface areas contacted by the deformable member (4) as well as the surface of the deformable member (4), excepting its surface areas in contact with the spokes (2) and the end face of the hub (3) are covered with a coherent layer (5) of polyurethane integral skin foam.

2. A steering wheel for motor vehicles according to claim 1, characterized in that the deformable member (4) consists of hard polyurethane foam, polystyrene foam, phenol resin foam, metal wire mesh or the like.

**Revendications**

1. Volant de direction en forme de cuvette, pour véhicule automobile, comportant un squelette ayant un corps de déformation (4) en un matériau homogène et plastiquement déformable, disposé à l'intérieur de la couronne (1) du volant, sur le moyeu (3) du volant prévu en retrait et relié à la couronne du volant par les rayons (2) de ce dernier, reposant sur la face supérieure desdits rayons et sur la face frontale dudit moyeu (3) et remplissant une partie de la forme en cuvette, caractérisé par le fait que la couronne (1) du volant, la périphérie extérieure du moyeu (3) du volant, les rayons (2) du volant, à l'exception des parties sur lesquelles repose le corps de déformation (4), et la surface du corps de déformation (4), à l'exception de ses surfaces d'appui sur les rayons du volant et de la face frontale du moyeu de volant, sont revêtus d'une couche de mousse avec peau de moulage et d'un seul tenant (5) en polyuréthane.

2. Volant pour véhicule automobile selon la revendication 1, caractérisé par le fait que le matériau pour le corps de déformation (4) est constitué par une mousse rigide en polyuréthane, par une mousse de polystyrène, par une mousse d'une résine phénolique, par un tricot de fil métallique ou par un autre matériau similaire.

Fig. 2

Fig. 1